# EUROPEAN PATENT SPECIFICATION

(11) **EP 1 712 753 B1**
(45) Date of publication and mention of the grant of the patent: **13.01.2016**
(21) Application number: 06112252.9
(22) Date of filing: 05.04.2006
(51) Int. Cl.: F01N 3/20

(54) **Module and method for introducing a urea solution into the exhaust gas of an engine**
Modul und Verfahren zum Einbringen einer Harnstofflösung in das Abgas einer Brennkraftmaschine
Module et procédé pour l'introduction d'une solution d'urée dans les gaz d'échappement d'un moteur

(30) Priority: 15.04.2005 IT MI20050651
(43) Date of publication of application: 18.10.2006
(73) Proprietor: FPT Industrial S.p.A., 10156 Torino (IT)
(72) Inventor: Dellora, Giancarlo, 10129, Torino (IT); Hagin, Harald, 8280, Kreuzlingen (CH)
(74) Representative: Franzolin, Luigi

(56) References cited:
- US-A1- 2001 018 826
- US-A1- 2003 003 029
- US-B1- 6 401 455

## Description

### FIELD OF THE INVENTION

The present invention relates to a module for introducing a fluid into a gas flow, and more particularly for introducing a urea solution into the exhaust gas flow of an internal combustion engine.

### PRIOR ART

A problem that is strongly felt in the field of internal combustion engines, in particular in the field of diesel engines, is the formation of nitrogen oxides during combustion; the nitrogen oxides are discharged with the exhaust gases from the engine and represent one of the main pollutants. Although several solutions have been suggested for reducing the formation of these compounds, nitrogen oxide levels in exhaust emissions continue to be a problem and, also in view of the need to comply with stricter emissions standards, there is a need for systems that are capable of reducing nitrogen oxide levels in exhaust gas. One such system is the SCR (Selective Catalytic Reduction) system; this system is based on the reaction, promoted by an appropriate catalytic system, between the nitrogen oxides in the exhaust gas and ammonia that is introduced as a reducing agent. The ammonia is usually introduced directly into the nitrogen oxide reduction system in the form of a reagent, preferably a liquid reagent, capable of releasing ammonia when exposed to the right temperature conditions or to the action of suitable catalysts. The preferred source is usually urea in an aqueous solution, for example a solution containing between 10 and 60% urea (concentrations of around 32.5% are preferable), from which the ammonia is generated by hydrolysis.

The urea may be introduced in a variety of ways, it is usually atomized into the exhaust gas flow, upstream of a converter containing the SCR catalyst.

Air-assisted atomizing systems exist, in which the liquid is mixed with compressed air and the mixture thus obtained expands when injected into the exhaust gas line, or the solution may be sprayed by means of a specific injecting device, or injector, usually making the liquid pass at a given pressure through a nozzle or valve, without using air. The latter method is proving to be of increasing interest, since mixing with compressed air promotes the precipitation of solids from the urea solution, which may create problems in the atomizing system. Furthermore, compressed air systems are very expensive and more complex to operate than airless injectors.

On the other hand, airless systems disperse the liquid less effectively; the decomposition of urea solutions, once the water has evaporated, may lead to the formation of other substances, in particular isocyanic acid. This is a highly reactive compound, that can lead to the formation of other substances that tend to form liquid deposits, such as liquid films, or solid deposits on the various structures of the exhaust gas system, namely the pipes, deflectors, mixers and inside the catalytic system. The injected solution must be dispersed well, before it touches the walls of the conduits, and also before coming into contact with other parts that disperse heat, for example metal structures such as static mixers, commonly used downstream of the point of injection to obtain a uniform concentration of urea in the gas flow entering the converter. The presence of elbows, widening, narrowing and other irregularities in the conduits upstream of the point of injection give rise to velocities with tangential or radial components which may produce uneven concentrations of liquid, before it evaporates, with the possible formation of deposits and reduced static mixer efficiency.

*From Patent application document* US 20030003029 A1 *it's known, for example, a device for introducing a liquid into a gas flow comprising a duct through which the gas can flow, introducing means for introducing the cited liquid into the duct and a flow straightener arranged inside the duct situated upstream the introducing means.*

*Other solution* is often injected upstream of long straight stretches (even 1 meter stretches) in the conduits leading to the static mixer, if present, or to the converter. This constitutes an important structural problem in case of systems to be installed on vehicles, and does not completely eliminate the problem of the formation of deposits.

It is therefore desirable to avoid the problems of uneven dispersion and the possibility of gas containing high concentrations of urea solution coming into contact with the walls of the conduits or other structures after the point of injection, without the need for bulky structures, which can be a serious problem in terms of vehicle design.

### SUMMARY OF THE INVENTION

The problems described above have now been solved according to the present invention with a module for injecting a fluid, preferably a liquid, into a gas flow, comprising:
a duct through which said gas flows;
means for introducing said fluid into said duct;
a flow straightener arranged inside said duct, upstream of said introducing means;
*and* a *static mixer (20) downstream of said introducing means (6, 7, 8); the module being characterized in that said mixer (20) comprises a mixing structure (3) housed on a conduit (2) provided within said duct (1); a clearance (4) being defined between said duct (1) and said conduct (2) to guarantee thermal insulation in respect of the outside.*

According to a preferred embodiment, the invention relates to a module for introducing a urea solution into an exhaust gas flow of an internal combustion engine, in particular a diesel engine equipped with an SCR catalytic system.

The invention relates in particular to what set forth in the attached claims.

### LIST OF DRAWINGS

The present invention will now be illustrated through a detailed description of the preferred, but not exclusive embodiments, provided merely by way of example, with the aid of the figures attached hereto, of which:
figure 1 is a longitudinal section of a module according to an embodiment of the present invention;
figure 2 is a front view of a flow straightener of a module according to the present invention.

### DETAILED DESCRIPTION OF A PREFERRED EMBODIMENT

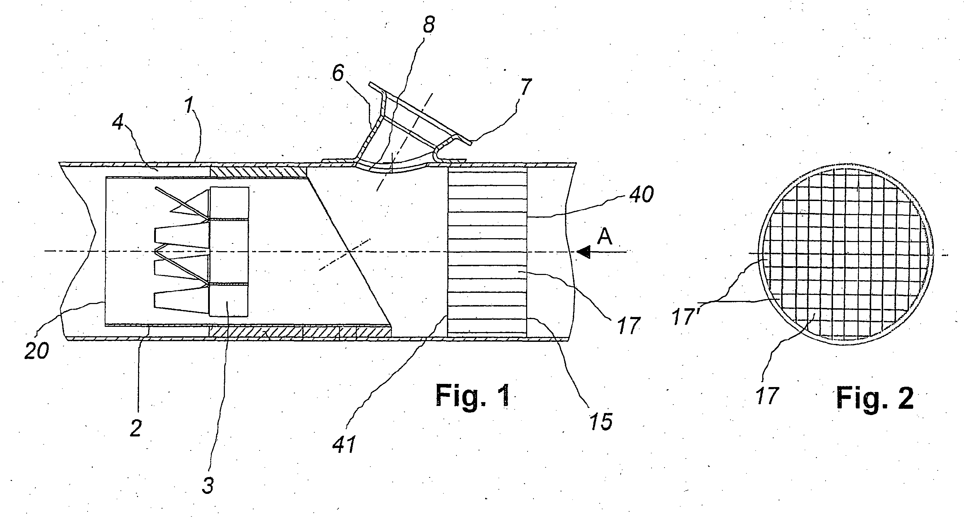

With reference to figure 1, the drawing shows a module for introducing a urea solution into the exhaust gas flow of an internal combustion engine. The module may be part of the exhaust gas line, and comprises a duct 1 with a longitudinal axis 9 along which the gas flows in the direction of the arrow A.

The module comprises means for injecting a liquid; said means may comprise a conventional injecting device (not shown, since it is already known) or injector, preferably capable of atomizing the liquid, and means 6 for fastening it to the module. For example, said means may be a portion of a pipe 6, optionally equipped with a flange 7, in correspondence with a hole 8 in the duct 1. The flange 7 may be useful for fastening a corresponding flange provided on the body of an injector. According to a preferred embodiment, the injecting means are suitable for spraying a jet of liquid, preferably atomized, said jet having an average velocity with a direction preferably inclined with respect to the direction of the average velocity of the exhaust gas; the two directions may, for example, form an angle of approximately 60°, preferably not more than 70°, with the velocity component of the jet of liquid parallel to the velocity of the gas having the same direction.

According to a preferred embodiment, the velocity of the gas lies on the longitudinal axis 9 of the duct 1. The axis of the portion of the pipe 6 may advantageously coincide with the direction of the jet, and slope accordingly. The direction of the jet is preferably incident with the axis 9 of the duct 1. The point of injection may be located in proximity to the hole 8 so as to interfere as little as possible with the gas flow.

The module comprises a straightener 15 of the gas flow upstream of the point of injection. The flow straightener may comprise, according to one embodiment of the invention, a plurality of channels 17, having side walls 18 parallel to the direction of the flow and more particularly to the longitudinal axis 9 of the duct. According to a possible embodiment, said channels have a rectangular cross section, with the shortest side measuring between 3 and 20 mm, for example between 5 and 10 mm, and preferably said channels have a square cross section. Figure 2 clearly illustrates how the channels need not necessarily all have the same cross section and shape: for example in the grid structure illustrated, some channels 17' have a smaller cross section so as not to interfere with the duct that houses the structure.

The channels are of a suitable length so as to achieve sufficient straightening of the flow and eliminate or adequately reduce any gas velocity components that are not parallel to the longitudinal axis 9. In the case of square or rectangular channels the length may range from between 3 and 10 times the shortest side of the cross section. In any case, these dimensions, which are purely indicative, may be optimized depending on the specific requirements, taking into consideration the various factors, such as pressure losses and the actual need for straightening, also as a function of the various structures that may be located upstream on the exhaust gas system.

According to a possible embodiment of the invention, the straightener may consist of a grid structure, built in any way that is known; for example it may consist of two series of parallel sheet metal elements, with the sheet metal elements of one series arranged at right angles to those of the other series. The sheet metal elements may have a series of notches along one side 40 or 41 thereof, arranged perpendicularly in relation to said side. Thus the notches on each sheet metal element of one series can fit into those of the sheet metal elements of the other series to form the structure, which is inserted and fastened inside the duct in a way that is known.

The module preferably comprises a static mixer 20, located downstream of the injecting means; said mixer may be of a kind that is known.

It may intercept the gas flow partially or completely. According to a possible example, it comprises a conduit 2 in which the mixing structure 3 is housed.

According to a possible embodiment of the invention, between the duct 1 and the conduit 2, which are preferably arranged coaxially, there is an clearance 4. Said clearance is between 3 and 10 mm wide, for example approximately 5 mm wide, if the conduit has a circular cross section.

The mixer thus enjoys a certain degree of thermal insulation with respect to the outside, which is advantageous if the liquid is injected in such a way that the sprayed liquid can be trapped by the gas flow and carried inside the static mixer, while a portion of the exhaust gas that does not contain the sprayed liquid, or that contains a lesser amount thereof, flows through the clearance 4.

This solution avoids the possible formation of deposits of the products of urea decomposition on relatively cold surfaces. Project engineers must take into account the fact that the jet widens upon leaving the injecting device, and the mixer may be shaped so as to shield the walls of the duct 1 against the jet, as illustrated in figure 1.

The invention also relates to a method for injecting a urea solution into the exhaust gas flow of an internal combustion engine, comprising the passage of said flow through a straightener as described above and the subsequent injection of the solution into the flow, preferably by means of atomization.

Atomization may take place without the use of compressed air.

The module and method according to the present invention are a means of eliminating or reducing the problem of the build-up of deposits also on the ducts upstream of a static mixer, if present, or on the static mixer, and of improving the efficiency of the latter. This is possible even without the use of long stretches of straight ducts, enabling the implementation of compact, versatile devices, which can easily be integrated into the vehicle design.

The invention also relates to an internal combustion engine, preferably a diesel engine, equipped with an SCR catalytic system and a module according to that set forth above, arranged inside the engine's exhaust gas system, and a vehicle, for example an industrial vehicle, equipped with said engine.

## Claims

1. Module for introducing a fluid, preferably a liquid, into a gas flow, comprising a duct (1) through which said gas can flow; means (6, 7, 8) for introducing said fluid into said duct (1); a flow straightener (1 5) arranged inside said duct, upstream of said introducing means (6, 7, 8); and a static mixer (20) downstream of said introducing means (6, 7, 8); the module being **characterized in that** said mixer (20) comprises a mixing structure (3) housed on a conduit (2) provided within said duct (1); a clearance (4) being defined between said duct (1) and said conduct (2) in order to guarantee thermal insulation in respect of the outside.

2. Module according to claim 1, **characterized in that** said duct (1) and said conduct (2) are coaxially arranged; said clearance (4) being wide between 3 mm and 10 mm.

3. Method for introducing a urea solution into the exhaust gas flow of an internal combustion engine, comprising the passage of said flow through a duct (1),
The method comprising the following steps:
- straightening of said gas flow through a flow straightener (1 5).
- subsequently injection of the solution into the flow by means of introducing means (6, 7, 8)
- subsequently mixing of the gas flow and solution through a mixer (20) arranged downstream of said introducing means (6, 7, 8),
the method being **characterized in that** said mixing is carried out within a conduit (2), by housing the mixing structure (3) on a conduit (2) provided within said duct (1), in order to define a clearance (4) between said duct (1) and said conduct (2) in order to guarantee thermal insulation in respect of the outside.

4. Internal combustion engine, preferably a diesel engine, equipped with an SCR catalytic system and a module according to any of the claims from 1 to 2, arranged inside the engine's exhaust gas system.

5. Vehicle equipped with an engine according to claim 4.

## Patentansprüche

1. Modul zum Einleiten eines Fluids, vorzugsweise einer Flüssigkeit, in eine Gasströmung, das umfasst: einen Kanal (1), durch den das Gas strömen kann; Mittel (6, 7, 8) zum Einleiten des Fluids in den Kanal (1); einen Strömungslenker (15), der in dem Kanal stromaufseitig der Einleitungsmittel (6, 7, 8) angeordnet ist; und einen statischen Mischer (20) stromabseitig der Einleitungsmittel (6, 7, 8); wobei das Modul **dadurch gekennzeichnet ist, dass** der Mischer (20) eine Mischungsstruktur (3), die in einer in dem Kanal (1) vorgesehenen Röhre (2) aufgenommen ist, umfasst; wobei zwischen dem Kanal (1) und der Röhre (2) ein Zwischenraum (4) definiert ist, um eine thermische Isolation gegenüber der äußeren Umgebung zu gewährleisten.

2. Modul nach Anspruch 1, **dadurch gekennzeichnet, dass** der Kanal (1) und die Röhre (2) koaxial angeordnet sind; wobei der Zwischenraum (4) eine Weite im Bereich von 3 mm bis 10 mm hat.

3. Verfahren zum Einleiten einer Harnstofflösung in die Abgasströmung einer Brennkraftmaschine, das den Durchgang der Strömung durch einen Kanal (1) umfasst,
wobei das Verfahren die folgenden Schritte umfasst:
- Lenken der Gasströmung durch den Strömungslenker (15),
- anschließend Einspritzen der Lösung in die Strömung durch Einleitungsmittel (6, 7, 8),
- anschließend Mischen der Gasströmung und der Lösung durch einen Mischer (20), der stromabseitig der Einleitungsmittel (6, 7, 8) angeordnet ist,
wobei das Verfahren **dadurch gekennzeichnet ist, dass** das Mischen in einer Röhre (2) ausgeführt wird, wobei die Mischungsstruktur (3) in einer in dem Kanal (1) vorgesehenen Röhre (2) so aufgenommen ist, dass zwischen dem Kanal (1) und der Röhre (2) einen Zwischenraum (4) definiert ist, um eine thermische Isolation gegenüber der äußeren Umgebung zu gewährleisten.

4. Brennkraftmaschine, vorzugsweise Dieselkraftmaschine, die mit einem SCR-Katalysatorsystem und mit einem Modul nach einem der Ansprüche 1 bis 2, die in dem Abgassystem der Kraftmaschine angeordnet sind, ausgerüstet ist.

5. Fahrzeug, das mit einer Kraftmaschine nach Anspruch 4 ausgerüstet ist.

## Revendications

1. Module pour introduire un fluide, de préférence un liquide, dans un écoulement de gaz, comprenant une conduite (1) à travers lequel ledit gaz peut s'écouler ; des moyens (6, 7, 8) pour introduire ledit fluide dans ladite conduite (1) ; un stabilisateur d'écoulement (15) agencé à l'intérieur de ladite conduite, en amont desdits moyens d'introduction (6, 7, 8) ; et un mélangeur statique (20) en aval desdits moyens d'introduction (6, 7, 8) ; le module étant **caractérisé en ce que** ledit mélangeur (20) comprend une structure de mélange (3) logée sur un conduit (2) prévu à l'intérieur de ladite conduite (1) ; un jeu (4) étant défini entre ladite conduite (1) et ledit conduit (2) afin de garantir l'isolation thermique par rapport à l'extérieur.

2. Module selon la revendication 1, **caractérisé en ce que** ladite conduite (1) et ledit conduit (2) sont agencés de manière coaxiale ; ledit jeu (4) étant large, compris entre 3 mm et 10 mm.

3. Procédé pour introduire une solution d'urée dans un écoulement de gaz d'échappement d'un moteur à combustion interne, comprenant le passage dudit écoulement à travers une conduite (1),
le procédé comprenant les étapes consistant à :
- stabiliser ledit écoulement de gaz par le biais d'un stabilisateur d'écoulement (15),
- injecter ensuite la solution dans l'écoulement au moyen de moyens d'introduction (6, 7, 8),
- mélanger ensuite l'écoulement de gaz et la solution par le biais d'un mélangeur (20) agencé en aval desdits moyens d'introduction (6, 7, 8),
le procédé étant **caractérisé en ce que** ledit mélange est réalisé à l'intérieur d'un conduit (2), en logeant la structure de mélange (3) sur un conduit (2) prévu à l'intérieur de ladite conduite (1), afin de définir un jeu (4) entre ladite conduite (1) et ledit conduit (2) afin de garantir l'isolation thermique par rapport à l'extérieur.

4. Moteur à combustion interne, de préférence un moteur diesel, équipé avec un système catalytique SCR et un module selon l'une quelconque des revendications 1 à 2, agencé à l'intérieur du système de gaz d'échappement du moteur.

5. Véhicule équipé d'un moteur selon la revendication 4.
